# EUROPEAN PATENT SPECIFICATION

(11) **EP 3 801 179 B1**
(45) Date of publication and mention of the grant of the patent: **04.05.2022**
(21) Application number: 19727369.1
(22) Date of filing: 28.05.2019
(51) Int. Cl.: A47L 15/42

(54) **HEAT PUMP DISHWASHER WITH ENHANCED EVAPORATOR EFFICIENCY**
WÄRMEPUMPENGESCHIRRSPÜLMASCHINE MIT VERBESSERTEM VERDAMPFERWIRKUNGSGRAD
LAVE-VAISSELLE À POMPE À CHALEUR À EFFICACITÉ D'ÉVAPORATION AMÉLIORÉE

(30) Priority: 08.06.2018 TR 201808217
(43) Date of publication of application: 14.04.2021
(73) Proprietor: Arçelik Anonim Sirketi, 34445 Istanbul (TR)
(72) Inventor: SAGLICAN, Emre, 34950 Istanbul (TR); POYRAZ, Onur, 34950 Istanbul (TR); ERSOY, Osman Gokhan, 34950 Istanbul (TR); AYDIN, Ilyas, 34950 Istanbul (TR); OZYURD, Cafer, 34950 Istanbul (TR)
(86) International application number: PCT/EP2019/063766
(87) International publication number: WO 2019/233819

(56) References cited:
- WO-A1-2014/154278
- WO-A1-2015/185086
- CH-A2- 699 692
- CN-A- 106 852 673
- DE-A1-102016 221 051
- DE-B3-102013 216 741

## Description

The present invention relates to a heat pump dishwasher.

The heat pump system provided in dishwashers with heat pump, composes of a compressor enabling circulation of a refrigerant by pressurizing it, flow tubes in which the refrigerant circulates, a condenser, an evaporator, and an expansion member. In heat pump dishwashers, water is heated by means of a heat pump system. The washing water accumulating in the main washing sump provided below the tub, is sent by means of a circulation pump to the water heating chamber in which the condenser is disposed. The water heated in the water heating chamber is directed to the spray arms through a multiport valve. This cycle continues until the washing water reaches a desired temperature. In a heat pump system, the evaporator is the component which draws heat from the environment, and the compressor is the component which conveys the heat to the condenser and the condenser is the component which transfers heat to the washing water. At least one fan directs environment air to the evaporator in order for the evaporator to draw heat. The environment air passing over the fins forming the evaporator and the surfaces of the refrigerant flow tubes, releases its heat on said surfaces and the residual air leaving the evaporator is sent to the kitchen environment. When the heat drawn by the evaporator from the air decreases, for example when the environment air temperature drops, the performance of the heat pump system decreases, increasing energy consumption. In the cooling cycle, the cooling fluid (refrigerant) is circulated in the refrigerant flow tubes in the heat pump system. The refrigerant leaving the evaporator and advancing to the compressor should be in vapor (gaseous) phase. If the evaporator fails to draw sufficient heat from the outer environment, the refrigerant reaches the compressor as a liquid-vapor mixture, causing vibration and a stressed operation which shortens the useful lifetime of the compressor.

A dishwasher comprising a heat pump arrangement according to the preamble of claim 1 is disclosed, for example, in DE 10 2016 221051 A1.

In the patent no. EP2224049 (B1), a dishwasher or a washing machine is disclosed, in which waste water heat is used in a heat pump system.

The patent no. EP2215955 (B1) relates to a dishwasher with heat pump. There are two cooling cycles in the heat pump system. One of said cycles is used for heating the washing water, and the other is used in drying step.

A latent-heat accumulator is provided in the heat pump system used in the dishwasher disclosed in the patent no. EP2322072 (B1).

A condenser and an evaporator are provided in water tanks in the heat pump dishwasher disclosed in the patent no. EP2658430 (B1).

The aim of the present invention is to realize a heat pump type dishwasher whose washing water heating performance is enhanced by increasing its evaporator efficiency.

The dishwasher realized to achieve the aim of the present invention has a heat pump system composed of a compressor performing the refrigerant cycle, a condenser, refrigerant flow tubes, and an expansion member. The washing water is heated by the condenser placed in a condenser chamber. In the dishwasher of the invention, at least one cylindrical reservoir is placed on the evaporator, which encircles the inlet portion and/or the outlet portion of the refrigerant flow tube. The waste water discharged after washing, is filled in the cylindrical reservoir, and during refrigerant cycle, the heat of the waste water is transferred to the refrigerant circulating in the evaporator refrigerant flow tube. The evaporator is capable of drawing heat from the waste water in the reservoirs, besides the environment air. Thus, the compressor operates for a shorter duration to heat the condenser, reducing energy consumption. The efficiency of the evaporator is increased, the refrigerant is sent to the compressor in vapor (gaseous) phase, and the useful lifetime of the compressor is extended.

The heat pump dishwasher realized to achieve the aim of the present invention is illustrated in the accompanying drawings, wherein:
Figure 1 is a schematic view of the heat pump dishwasher of the invention.

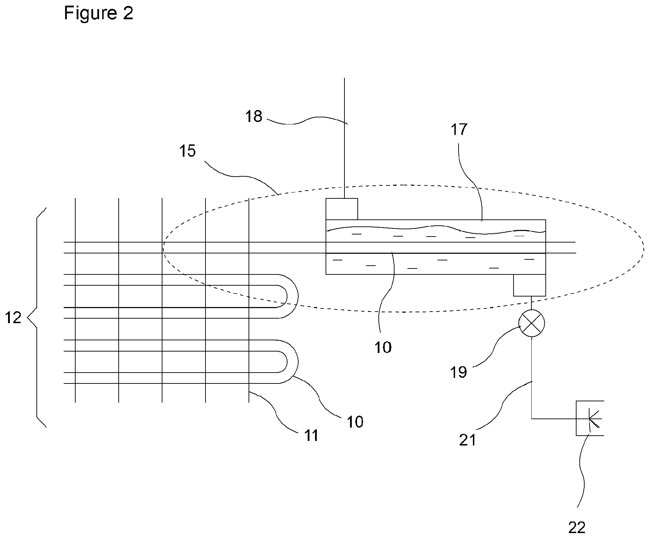

Figure 2 is a schematic view of a water reservoir placed on the inlet portion of the evaporator refrigerant flow tube.

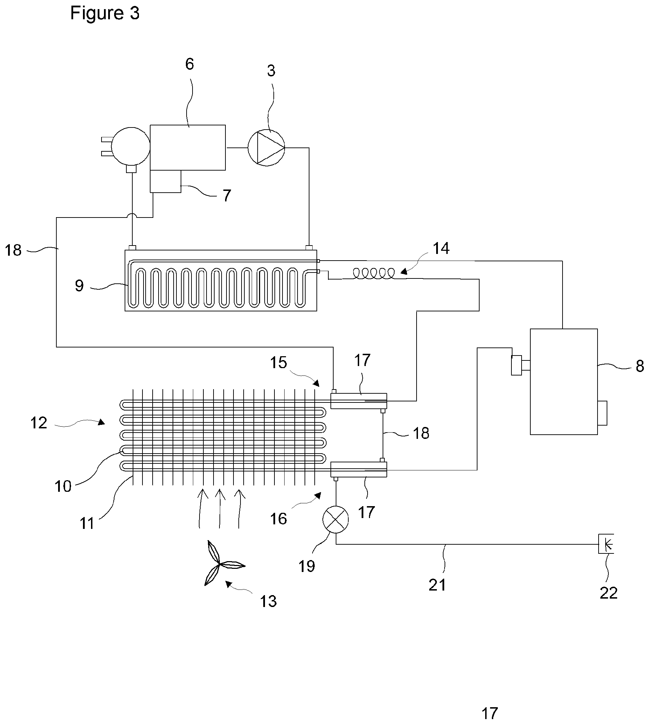

Figure 3 is a schematic view of the heat pump system and two water reservoirs placed on the inlet portion and the outlet portion of the evaporator refrigerant flow tube.

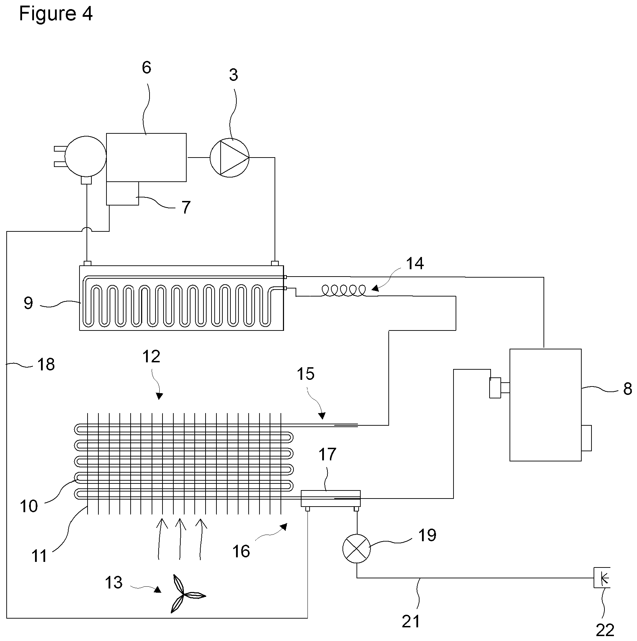

Figure 4 is a schematic view of the heat pump system and a water reservoir placed on the outlet portion of the evaporator refrigerant flow tube.

The elements in the figures are numbered individually and the correspondence of these numbers are given hereinafter.
1. Dishwasher
2. Tub
3. Circulation pump
4. Basket
5. Spray arm
6. Sump
7. Discharge pump
8. Compressor
9. Condenser
10. Refrigerant flow tube
11. Fins
12. Evaporator
13. Fan
14. Expansion member
15. Inlet portion
16. Outlet portion
17. Reservoir
18. Supply line
19. Discharge valve
20. Water tank
21. Discharge line
22. Wastewater discharge

The dishwasher (1) comprises a tub (2) in which the washing, rinsing and drying processes are performed, a circulation pump (3) enabling sending washing water to the washing environment in the tub (2), at least one basket (4) in which the kitchenware to be washed are placed, at least one spray arm (5) enabling sending washing water to the baskets (4), a sump (6) provided below the tub (2), in which washing water is collected, a discharge pump (7) enabling sending waste water through a discharge line (21) to a wastewater discharge (22) and a heat pump system enabling heating washing water.

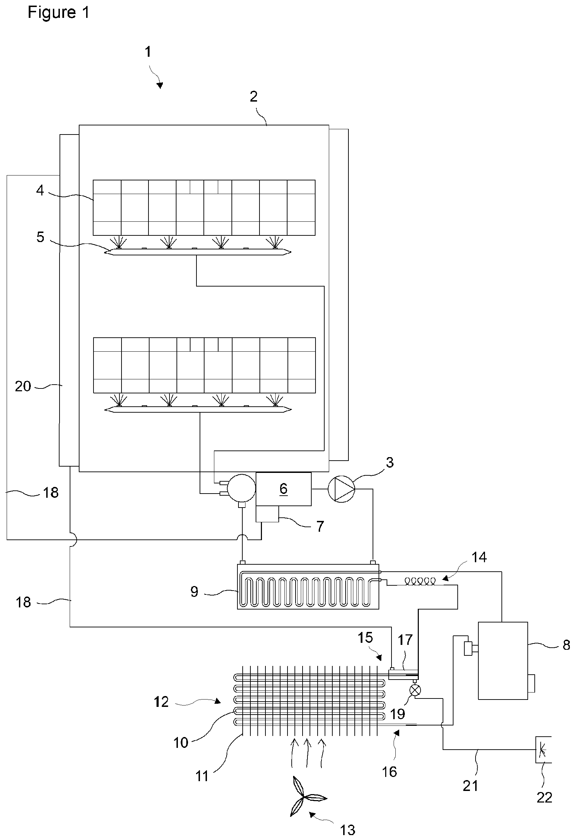

The heat pump system comprises a compressor (8) performing the refrigerant cycle, a condenser (9) used in heating washing water, an evaporator (12) consisting of fins (11) and a refrigerant flow tube (10) of serpentine structure, enabling heat to be drawn from the outer environment and to be transferred to the condenser (9) by means of the compressor (8), at least one fan (13) enabling heat transfer by sending environment air onto the evaporator (12), and an expansion member (14) for example a capillary tube or an expansion valve, provided between the condenser (9) and the evaporator (12) (Figure 1).

The evaporator (12) further comprises an inlet portion (15) through which the refrigerant leaving during the refrigerant (cooling fluid) cycle the condenser (9) and the expansion member (14), enters the refrigerant flow tube (10), and an outlet portion (16) through which the refrigerant leaving the refrigerant flow tube (10) is sent to the compressor (8).

The condenser (9) provided in the heat pump system, is used in heating the water received from the sump (6) by means of the circulation pump (3) and used in washing.

The dishwasher (1) of the invention comprises at least one reservoir (17) placed on the evaporator (12) so as to encircle the inlet portion (15) and/or the outlet portion (16) of the refrigerant flow tube (10), in which the water discharged after the washing process is filled, enabling transferring the heat of the waste water to the refrigerant circulating in the evaporator (12) during refrigerant cycle.

In the preferred embodiment of the invention, the reservoir (17) has a cylindrical shape.

In an embodiment of the invention, the water discharged after" the hot rinsing process" is filled into the reservoir (17).

In the heat pump dishwasher (1), the heat of the water in the reservoir(s) (17) provided at the inlet portion (15) and/or the outlet portion (16) of the evaporator (12), is transferred to the refrigerant circulating in the refrigerant flow tube (10) of the evaporator (12). Temperature of the refrigerant leaving the evaporator (12) and therefore temperature of the condenser (9) used to heat the washing water, are enabled to be increased, thereby enhancing efficiency of the heat pump system and reducing energy consumption. The refrigerant leaving the evaporator (12) is enabled to enter the compressor (8) in "gaseous phase", improving the operating conditions and extending the useful lifetime of the compressor (8).

In an embodiment of the invention, after the washing process, the waste water is collected in the sump (6) and is sent into the reservoir (17) through a supply line (18) by the discharge pump (7). After releasing its heat to the evaporator (12) refrigerant flow tube (10), the water in the reservoir (17) is discharged through the wastewater discharge (22).

In another embodiment of the invention, the dishwasher (1) comprises at least one discharge valve (19) provided on the outlet of the reservoir (17), whose operation is regulated by the control unit (not shown in the figures), enabling water to be kept in the reservoir (17) throughout a predetermined duration and then to be discharged, and a discharge line (21) provided between the discharge valve (19) and the wastewater discharge (22).

In another embodiment of the invention, the dishwasher (1) comprises a water tank (20) enabling water to be accumulated before the washing process and to be brought to environment temperature, and thereby enabling saving energy in the washing process by reducing the water heating duration, and at least two supply lines (18) one of which is disposed between the discharge pump (7) and the water tank (20), and the other disposed between the water tank (20) and the reservoir(s) (17). In this embodiment, washing water is sent by the discharge pump (7) through the supply line (18) to the water tank (20) preferably after the hot rinsing process. During operation of the heat pump system, water stored therein is sent through the other supply line (18) to the reservoirs (17) provided on the inlet portion (15) and/or the outlet portion (16) of the evaporator (12) refrigerant flow tube (10) (Figure 1).

In the dishwasher (1) of the invention, along with environment air, heat can also be drawn from the waste water located in the reservoirs (17) which is at environment temperature or at higher temperatures, by means of the reservoirs (17) placed on the inlet portion (15) and or the outlet portion (16) of the refrigerant flow tube (10) of the evaporator (12) and filled with waste water. The compressor (8) thus operates for a shorter duration to heat the condenser (9), reducing energy consumption. Evaporator (12) efficiency is enhanced by using waste water and the refrigerant is sent to the compressor (8) in vapor (gaseous) phase.

## Claims

1. A dishwasher (1) comprising a tub (2), a circulation pump (3), at least one basket (4), at least one spray arm (5), a sump (6) provided below the tub (2), a discharge pump (7), a heat pump system comprising a compressor (8), a condenser (9), at least one fan (13) sending environment air onto an evaporator (12), an expansion member (14) provided between the condenser (9) and the evaporator (12), and the evaporator (12) consisting of fins (11) and a refrigerant flow tube (10) enabling heat to be drawn from the outer environment and to be transferred to the condenser (9) by means of the compressor (8), and at least one reservoir (17) **characterized in that** the at least one reservoir (17) is placed on the evaporator (12) so as to encircle an inlet portion (15) and/or an outlet portion (16) of the refrigerant flow tube (10), and is filled the water discharged after a washing process.

2. A dishwasher (1) according to claim 1, **characterized in that** the reservoir (17) has a cylindrical shape.

3. A dishwasher (1) according to claim 1 or 2, **characterized in that** the reservoir (17) is filled with the water discharged after hot rinsing

4. A dishwasher (1) according to any one of the preceding claims, **characterized in that** it further comprises a supply line (18) enabling the waste water collected in the sump (6), to be sent into the reservoir (17) by the discharge pump (7).

5. A dishwasher (1) according to any one of the preceding claims, **characterized in that** it further comprises at least one discharge valve (19) provided on the outlet of the reservoir (17), enabling water to be kept in the reservoir (17) throughout a predetermined duration and then to be discharged.

6. A dishwasher (1) according to any one of the preceding claims, **characterized in that** it further comprises a water tank (20) and at least two supply lines (18) of which one is provided between the water tank (20) and the discharge pump (7) and the other between the water tank (20) and the reservoir (17).

## Patentansprüche

1. Eine Geschirrspülmaschine (1) **umfasst** eine Wanne (2), eine Umwälzpumpe (3), mindestens einen Korb (4), mindestens einen Sprüharm (5), einen unter der Wanne (2) vorgesehenen Sumpf (6), eine Ablaufpumpe (7), ein Wärmepumpensystem mit einem Kompressor (8), einem Kondensator (9), mindestens einem Gebläse (13), das Umgebungsluft auf einen Verdampfer (12) schickt, einem Expansionselement (14), das zwischen dem Kondensator (9) und dem Verdampfer (12) vorgesehen ist, wobei der Verdampfer (12), bestehend aus Rippen (11) und einem Kältemittelströmungsrohr (10), es ermöglicht, Wärme aus der äußeren Umgebung zu ziehen und mittels des Kompressors (8) an den Kondensator (9) zu übertragen, und mindestens ein Reservoir (17), **gekennzeichnet ist sie durch** mindestens ein Reservoir (17), das so auf dem Verdampfer (12) angeordnet ist, dass es einen Einlassabschnitt (15) und/oder einen Auslassabschnitt (16) des Kühlmittelströmungsrohrs (10) umgibt, und mit dem nach einem Waschvorgang abgeführten Wasser gefüllt wird.

2. Eine Geschirrspülmaschine (1), wie in Anspruch 1 aufgeführt, **ist dadurch gekennzeichnet, dass** das Reservoir (17) eine zylindrische Form hat.

3. Eine Geschirrspülmaschine (1), wie in Anspruch 1 oder 2 aufgeführt, **ist dadurch gekennzeichnet, dass** das Reservoir (17) mit dem Wasser gefüllt wird, das nach dem Heißspülen abgelassen wird.

4. Eine Geschirrspülmaschine (1), wie in den vorherigen Ansprüchen aufgeführt, **ist dadurch gekennzeichnet, dass** sie des Weiteren eine Versorgungsleitung (18) umfasst, die es ermöglicht, dass das im Sumpf (6) gesammelte Abwasser durch die Ablaufpumpe (7) in das Reservoir (17) geleitet wird.

5. Eine Geschirrspülmaschine (1), wie in den vorherigen Ansprüchen aufgeführt, **ist dadurch gekennzeichnet, dass** es darüber hinaus mindestens ein Auslassventil ( 19 ) umfasst, das am Auslass des Reservoirs ( 17 ) vorgesehen ist und es ermöglicht, Wasser während einer vorbestimmten Dauer in dem Reservoir ( 17 ) zu halten und dann abzulassen.

6. Eine Geschirrspülmaschine (1), wie in den vorherigen Ansprüchen aufgeführt, **ist dadurch gekennzeichnet, dass** es darüber hinaus einen Wassertank (20) und mindestens zwei Versorgungsleitungen (18) umfasst,

## Revendications

1. Un lave-vaisselle (1) **comprenant** une cuve (2), une pompe de circulation (3), au moins un panier (4), au moins un bras d'aspersion (5), un carter (6) prévu sous la cuve (2), une pompe de décharge (7), un système de pompe à chaleur comprenant un compresseur (8), un condenseur (9), au moins un ventilateur (13) envoyant de l'air ambiant sur un évaporateur (12), un élément d'expansion (14) prévu entre le condenseur (9) et l'évaporateur (12), et l'évaporateur (12) étant constitué d'ailettes (11) et d'un tube d'écoulement de réfrigérant (10) permettant à la chaleur d'être extraite de l'environnement extérieur et d'être transférée au condenseur (9) au moyen du compresseur (8), et au moins un réservoir (17), **est caractérisé en ce qu'au** moins un réservoir (17) est placé sur l'évaporateur (12) de manière à encercler une partie d'entrée (15) et/ou une partie de sortie (16) du tube d'écoulement de réfrigérant (10), et est rempli de l'eau évacuée après un processus de lavage.

2. Un lave-vaisselle (1) selon la déclaration 1, **est caractérisé en ce que** le réservoir (17) a une forme cylindrique.

3. Un lave-vaisselle (1) selon la déclaration 1 ou 2, **est caractérisé en ce que** le réservoir (17) est rempli avec l'eau évacuée après le rinçage à chaud.

4. Un lave-vaisselle (1) selon l'une quelconque des déclarations précédentes, **est caractérisé en ce qu'il** comprend en outre une ligne d'alimentation (18) permettant aux eaux usées collectées dans le carter (6) d'être envoyées dans le réservoir (17) par la pompe de décharge (7).

5. Un lave-vaisselle (1) selon l'une quelconque des déclarations précédentes, **est caractérisé en ce qu'il** comprend en outre au moins une soupape de décharge (19) prévue sur la sortie du réservoir (17), permettant à l'eau d'être maintenue dans le réservoir (17) pendant une durée prédéterminée et d'être ensuite déchargée.

6. Un lave-vaisselle (1) selon l'une quelconque des déclarations précédentes, **est caractérisé en ce qu'il** comprend en outre un réservoir d'eau (20) et au moins deux lignes d'alimentation (18) dont l'une est prévue entre le réservoir d'eau (20) et la pompe de décharge (7) et l'autre entre le réservoir d'eau (20) et le réservoir (17).
